# EUROPÄISCHE PATENTANMELDUNG

(11) **EP 2 034 569 A1**
(43) Veröffentlichungstag der Anmeldung: **11.03.2009**
(21) Anmeldenummer: 07405268.9
(22) Anmeldetag: 07.09.2007
(51) Int. Cl.: H01R 25/16, H02G 3/04

(54) **Stromführende Sockelleiste**

(71) Anmelder: Blaser Systems AG, 3110 Münsingen (CH)
(72) Erfinder: Blaser, Sacha, 3032 Hinterkappelen (CH)
(74) Vertreter: Rüfenacht, Philipp Michael

(57) **Zusammenfassung**

Eine Sockelleiste mit mehreren integrierten Steckdosen (610, 620, 630) für die Aufnahme eines Steckers eines elektrischen Geräts, wobei innerhalb der Sockelleiste wenigstens zwei entlang einer Längsrichtung der Sockelleiste verlaufende Stromleiter (10, 20) angeordnet sind, welche mit Buchsen (200.1, 200.2) der integrierten Steckdosen (610, 620, 630) elektrisch verbunden sind, zeichnet sich dadurch aus, dass die wenigstens zwei Stromleiter (10, 20) kammförmig ausgebildet sind.

## Beschreibung

### Technisches Gebiet

Die Erfindung betrifft eine Sockelleiste mit mehreren integrierten Steckdosen für die Aufnahme eines Steckers eines elektrischen Geräts, wobei innerhalb der Sockelleiste wenigstens zwei entlang einer Längsrichtung der Sockelleiste verlaufende Stromleiter angeordnet sind, welche mit Buchsen der integrierten Steckdosen elektrisch verbunden sind. Des Weiteren bezieht sich die Erfindung auf ein Verfahren zur Montage einer Sockelleiste.

### Stand der Technik

Sockelleisten, bzw. Fussbodenleisten oder Sesselleisten, sind Abschlussleisten, welche insbesondere zur Abdeckung von Fugen am Übergang zwischen Fussböden und Wänden angebracht werden. Spezielle Formen dieser Sockelleisten verfügen zudem über integrierte Kabelkanäle, welche beispielsweise zur verdeckten Verlegung von Strom führenden elektrischen Kabeln Verwendung finden. Andere Ausführungen der Sockelleisten verfügen zudem über integrierte Steckdosen, so dass elektrische Geräte z. B. direkt durch die Sockelleiste mit Strom versorgt werden können.

In der US 2,312,580 (O'Brien) wird beispielsweise eine Sockelleiste beschrieben, welche in regelmässigen Abständen über zweipolige Steckdosen verfügt. Die Steckdosenkontakte sind über insgesamt drei im Querschnitt kreisrunde Leiterdrähte elektrisch verbunden. Die Leiterdrähte sind dabei so mit den Kontakten der Steckdosen verbunden, dass die eine Hälfte der Steckdosen dauernd Strom liefern, während die andere Hälfte der Steckdosen über einen gemeinsamen Schalter ein- oder ausgeschaltet werden können.

Die EP 0 462 329 (Inovac SA) beschreibt eine Sockelleiste mit dreipoligen Steckdosen. Die Steckdosenkontakte sind dabei an drei parallel zueinander verlaufenden und im Querschnitt kreisrunden Leiterdrähten festgeklemmt, welche in einer Ebene übereinander angeordnet sind.

Die meisten der aus dem Stand der Technik bekannten Sockelleisten mit integrierten Steckdosen vermögen jedoch nicht vollständig zu befriedigen, da sie meist relativ grosse Abmessungen aufweisen und zudem oft relativ kompliziert im Aufbau konzipiert sind. Dies führt unter anderem zu hohen Produktionskosten und einer beschränkten Verwendbarkeit bei engen Platzverhältnissen.

Es besteht daher nach wie vor ein Bedarf nach verbesserten Konzepten im Bereich der Sockelleisten mit integrierten Steckdosen, welche technisch überzeugen und eine wirtschaftliche Produktion erlauben.

### Darstellung der Erfindung

Aufgabe der Erfindung ist es daher, eine dem eingangs genannten technischen Gebiet zugehörende Sockelleiste zu schaffen, welche sich durch geringe Abmessungen auszeichnet und zudem kostengünstig herstellbar ist.

Die Lösung der Aufgabe ist durch die Merkmale des Anspruchs 1 definiert. Gemäss der Erfindung sind die wenigstens zwei Stromleiter kammförmig ausgebildet.

Aufgrund der wenigstens zwei kammförmig ausgebildeten Stromleiter können die Buchsen der integrierten Steckdosen beispielsweise auf engem Raum und in flexibler Weise mit den zinkenförmigen Vorständen der Stromleiter verbunden werden. In den Freiräumen zwischen den zinkenförmigen Vorständen der Stromleiter bleibt dabei Platz übrig, welcher für eine möglichst kompakte Anordnung der verschiedenen Elemente der Sockelleiste verwendet werden kann. Somit können die wenigstens zwei Stromleiter und weitere Komponenten der Sockelleisten äusserst kompakt und unter bestmöglicher Ausnutzung des in der Sockelleiste vorhandenen Innenraums angeordnet werden. Dadurch können Sockelleisten mit geringen äusseren Abmessungen hergestellt und optimal an den meist begrenzt zur Verfügung stehenden Raum im Sockelbereich einer Wand angepasst werden, wodurch der Platzbedarf der Sockelleiste deutlich reduziert wird. Verglichen mit Sockelleisten gemäss bekanntem Stand der Technik können aber auch weitere Funktionselemente, wie z. B. zusätzliche Kabelkanäle oder dergleichen, in der Sockelleiste integriert werden, ohne die äusseren Abmessungen der Sockelleiste zu vergrössern.

Besonders bevorzugt sind die wenigstens zwei Stromleiter berührungslos miteinander kämmend angeordnet. Dabei liegen die zinkenförmigen Vorstände des einen Stromleiters in den Freiräumen zwischen den zinkenförmigen Vorständen des zweiten Stromleiters und umgekehrt. Damit werden die Freiräume zwischen den zinkenförmigen Vorständen bestmöglich ausgenutzt und insgesamt eine besonders kompakte Bauweise erreicht. Werden die wenigstens zwei kämmend angeordneten Stromleiter entlang einer Längsrichtung der Sockelleiste nebeneinander angebracht, wird zudem eine horizontale Anordnung der integrierten Steckdosen möglich. Die Buchsen der integrierten Steckdosen können in diesem Fall nämlich auf einer horizontalen Linie in der Sockelleiste angeordnet werden. Damit wird erreicht, dass Stecker in einer bei Steckdosen üblichen horizontalen Ausrichtung eingesteckt werden können, was die Handhabung beim Einstecken in die erfindungsgemässe Sockelleiste vereinfacht.

Es ist aber grundsätzlich auch möglich, die wenigstens zwei Stromleiter in einer nicht kämmenden Weise anzuordnen. Bei integrierten Steckdosen mit sehr grossen Abständen zwischen den Buchsen kann es beispielsweise auch vorteilhaft sein, die zinkenförmigen Vorstände der wenigstens zwei Stromleiter einander abgewandt anzubringen und die beiden Rückgrate der wenigstens zwei Stromleiter einander direkt gegenüberliegend anzuordnen.

Insbesondere sind die wenigstens zwei Stromleiter auf einer gemeinsamen Isolatorschiene, welche bevorzugt als Rechteckleiste ausgebildet ist, befestigt. Damit können die wenigstens zwei Stromleiter, welche in der Regel eine gewisse Formflexibilität aufweisen, beispielsweise vor der eigentlichen Montage in der Sockelleiste auf der relativ einfach handhabbaren und weitgehend strukturstabilen Isolatorschiene angebracht werden. Zur Befestigung in der Sockelleiste muss dann bloss die Isolatorschiene in der Sockelleiste fixiert werden. Da es sich hierbei um ein einzelnes Bauteil handelt, stellt dies aber einen einfach durchzuführenden Arbeitsschritt dar. Damit ist ein modularer Aufbau der erfindungsgemässen Sockelleisten gegeben, wodurch sich einzelne Bauteile, wie z. B. die wenigstens zwei Stromleiterschienen, auch bei einer bereits montierten Sockelleiste in einfacher Weise auszutauschen lassen. Es liegt aber auch im Rahmen der Erfindung, die wenigstens zwei Stromleiter auf getrennten Isolatorschienen oder direkt in nicht leitenden Befestigungselementen der Sockelleiste zu befestigen.

Die Rechtecksform der Isolatorschiene erlaubt des Weiteren eine besonders einfache Aufnahme in der Sockelleiste. So kann diese beispielsweise durch U-förmige Befestigungsvorrichtungen, wie z. B. hinterschnittene Profilleisten oder Klemmbriden, in der Sockelleiste form- und/oder kraftschlüssig, z. B. durch Verklemmung oder Verrastung, befestigt werden. Zudem stehen bei einer Rechtecksleiste in Längsrichtung vier senkrecht zueinander angeordnete Seitenflächen zur Verfügung, welche zur Befestigung der wenigstens zwei Stromleiter und/oder von zusätzlichen Stromleitern, Kabeln oder anderen Funktionselementen nutzbar sind.

Es eignen sich aber grundsätzlich auch andere nicht rechteckige Formen für die Isolatorschiene. Insbesondere dreieckförmige oder U-förmige Profilleisten können ebenfalls verwendet werden.

Die wenigstens zwei Stromleiter sind dabei mit Vorteil gemeinsam auf einer ersten Seitenfläche der Isolatorschiene flach aufliegend angebracht, wobei die wenigstens zwei Stromleiter bevorzugt bandartig ausgebildet sind. Aufgrund der gemeinsamen flachen Befestigung auf der ersten Seite der Isolatorschiene wird eine besonders kompakte und Platz sparende Bauweise der Isolatorschiene mit den wenigstens zwei Stromleitern erzielt. Gleichzeitig können die beiden Stromleiter so in einfacher Weise senkrecht zu den Buchsen der integrierten Steckdosen ausgerichtet werden, was die elektrische Verbindung mit den Buchsen baulich vereinfacht. In diesem Fall können beispielsweise für die integrierten Steckdosen Buchsen gleicher Länge verwendet werden, was die Konstruktion der Sockelleisten vereinfacht.

Eine bandartige Struktur vermindert zudem den Platzbedarf für die wenigstens zwei Stromleiter zusätzlich. Gleichzeitig können aber ausreichend grosse Querschnittsflächen der wenigstens zwei Stromleiter realisiert werden, was sicherstellt, dass der elektrische Widerstand der wenigstens zwei Stromleiter gering gehalten werden kann. Nicht bandartige Stromleiter sind zwar ebenfalls denkbar. Beispielsweise runde Stromleiter weisen aber bei einer der bandartigen Struktur entsprechenden Querschnittsfläche eine grössere Höhe bzw. einen grösseren Durchmesser auf, was mit einem zusätzlichen Platzbedarf in der Sockelleiste verbunden ist.

Es ist aber auch möglich, die wenigstens zwei Stromleiter auf unterschiedlichen Seitenflächen anzubringen und/oder nicht flach liegend auszurichten. Dies kann beispielsweise bei Steckern mit stark unterschiedlich langen Steckerstiften von Vorteil sein, welche nicht in einer gemeinsamen Ebene kontaktiert werden können.

Bevorzugt sind die wenigstens zwei Stromleiter je in einer von wenigstens zwei Vertiefungen auf der ersten Seitenfläche vollständig eingelassen, wobei bevorzugt die wenigstens zwei Vertiefungen der Isolatorschiene den wenigstens zwei Stromleitern entsprechende Formen aufweisen. Dadurch wird ein Hervorstehen der wenigstens zwei Stromleiter vollständig vermieden. Die Isolatorschiene weist dann auch bei befestigten Stromleitern einen vollständig rechteckigen Querschnitt auf. Damit wird einerseits der Platzbedarf weiter reduziert und andererseits wird die Montage der Isolatorschiene in der Sockelleiste weiter vereinfacht, da aufgrund der ebenen Oberfläche eben ausgebildete Befestigungsvorrichtungen ohne spezielle Aussparungen zur optimalen Befestigung ausreichen. Prinzipiell können die wenigstens zwei Stromleiter aber auch auf einer ebenen Seitenfläche der Isolatorschiene, welche keine Aussparungen zum Einlassen der einzelnen Stromleiter aufweist, vorliegen.

Insbesondere vorteilhaft ist es zudem, wenn Buchsenpaare der integrierten Steckdosen, welche mit den wenigstens zwei Stromleitern elektrisch verbunden sind, auf zinkenförmigen Vorständen der wenigstens zwei Stromleiter angebracht sind und bevorzugt senkrecht von diesen abstehen. Somit wird eine sehr einfache und Platz sparende Befestigung der Buchsenpaare an den wenigstens zwei Stromleitern möglich. Die Buchsenpaare können beispielsweise direkt durch Schrauben, welche durch Befestigungsbohrungen in den zinkenförmigen Vorständen verlaufen, verschraubt werden. Damit kann z. B. eine senkrechte Ausrichtung der Buchsenpaare zu den wenigstens zwei Stromleitern auf besonders vorteilhafte Weise erreicht werden. Die senkrechte Ausrichtung der Buchsenpaare auf den Stromleitern ist insbesondere vorteilhaft, wenn die wenigstens zwei Stromleiter flach auf der einen Seitenfläche der Isolatorschiene aufliegen. Damit sind die Seitenfläche der Isolatorschiene, die wenigstens zwei Stromleiterschienen und die Buchsenpaare der integrierten Steckdosen direkt übereinander liegend angeordnet, wodurch sich bei der Montage in der Sockelleiste eine Platz sparende Anordnung ergibt und die einzelnen Bauteile bewusst einfach gehalten werden können. Letzteres führt wiederum zu tieferen Herstellungskosten.

Bei miteinander kämmenden wenigstens zwei Stromleisten ist es dadurch auch möglich, mehrere Buchsen der integrierten Steckdosen auf einer horizontalen Linie, welche entlang der Längsrichtung der Sockelleiste verläuft, anzuordnen, wodurch sich Stecker in einer Ausrichtung mit horizontal nebeneinander angeordneten Steckerstiften in der Sockelleiste einstecken lassen.

Prinzipiell ist es aber auch möglich, die Buchsenpaare an den zinkenförmigen Vorständen festzuklemmen oder stoffschlüssig, z. B. durch Verlöten oder Verschweissen, zu befestigen. Ebenso können die Buchsenpaare der integrierten Steckdosen grundsätzlich auch an den Rückgraten der wenigstens zwei Stromleiter befestigt werden.

Mit Vorteil ist auf einer zweiten Seitenfläche der Isolatorschiene, welche der ersten Seitenfläche bevorzugt gegenüberliegt, mindestens ein zusätzlicher Stromleiter angebracht. Dadurch lassen sich neben den in einem Stromkreis unabdingbaren wenigstens zwei Stromleitern beispielsweise ein Erdleiter und/oder ein zusätzlicher Stromleiter, welcher einem zweiten Stromkreis zugeordnet ist, in der Sockelleiste integrieren. Der mindestens eine zusätzliche Stromleiter kann insbesondere auch bandartig ausgebildet sein und ebenfalls in Vertiefungen auf der zweiten Seitenfläche integriert vorliegen, was den Vorteil hat, dass der Platzbedarf für den zusätzlichen Stromleiter gering gehalten werden kann.

Bevorzugt sind dabei zusätzliche Buchsen der integrierten Steckdosen, welche mit dem mindestens einen zusätzlichen Stromleiter elektrisch verbunden sind, durch Bohrungen in der Isolatorschiene durchgeführt, so dass sie insbesondere auf der ersten Seitenfläche aus der Isolatorschiene herausragen. Die Buchsen können dadurch in der gleichen Richtung ausgerichtet vorliegen, wie die Buchsen der wenigstens zwei Stromleiter an der ersten Seitenfläche. Damit wird eine Platz sparende Bauweise der integrierten Steckdosen mit bestmöglich reduziertem Konstruktionsaufwand erreicht.

Es liegt aber auch im Rahmen der Erfindung, die zusätzlichen Buchsen durch Kontakte, welche beispielsweise aussen um die Isolatorschiene herum geführt werden, mit dem mindestens einen zusätzlichen Stromleiters elektrisch zu kontaktieren.

Des Weiteren ist es von Vorteil, auf einer zweiten Seitenfläche der Isolatorschiene, welche der ersten Seitenfläche bevorzugt gegenüberliegt, mindestens zwei zusätzliche Stromleiter anzuordnen. Diese sind bevorzugt kammförmig ausgebildet, sowie flach aufliegend und miteinander kämmend angeordnet und insbesondere ebenfalls bandartig ausgebildet. Dadurch lassen sich neben den in einem Stromkreis unabdingbaren wenigstens zwei Stromleitern beispielsweise ein Erdleiter und ein Stromleiter, welcher einem zweiten Stromkreis zugeordnet ist, in der Sockelleiste integrieren. Die kämmende Anordnung der mindestens zwei kammförmigen Stromleiter auf der zweiten Seitenfläche der Isolatorschiene hat wie bei den wenigstens zwei Stromleitern auf der ersten Seitenfläche den wesentlichen Vorteil, dass die Stromleiter in Platz sparender Weise angeordnet werden können. Wie auf der ersten Seitenfläche können aber auch die mindestens zwei zusätzlichen Stromleiter auf der zweiten Seitenfläche in nicht kämmender Weise angeordnet werden.

Insbesondere sind zusätzliche Buchsen der integrierten Steckdosen, welche jeweils mit einem der mindestens zwei zusätzlichen Stromleitern elektrisch verbunden sind, an zusätzlichen zinkenförmigen Vorständen der mindestens zwei zusätzlichen Stromleiter angebracht. Dabei sind die zusätzlichen Buchsen bevorzugt durch Bohrungen in der Isolatorschiene durchgeführt, so dass sie insbesondere auf der ersten Seitenfläche aus der Isolatorschiene herausragen. Die zusätzlichen zinkenförmigen Vorstände der mindestens zwei zusätzlichen Stromleiter auf der zweiten Seitenfläche sind bevorzugt versetzt zu den zinkenförmigen Vorständen der wenigstens zwei Stromleiter auf der ersten Seitenfläche angeordnet. Damit wird erreicht, dass die zusätzlichen Buchsen in einem Bereich zwischen den zinkenförmigen Vorständen auf der ersten Seitenfläche aus dieser herausragen.

Prinzipiell können die zusätzlichen zinkenförmigen Vorstände auf der zweiten Seitenfläche aber auch überlappend zu den zinkenförmigen Vorständen auf der ersten Seitenfläche angeordnet sein. In diesem Fall können die zusätzlichen Buchsen durch Kontakte, welche beispielsweise aussen um die Isolatorschiene herum geführt werden, mit den mindestens zwei zusätzlichen Stromleitern elektrisch kontaktiert werden.

Mit Vorteil ist die Isolatorschiene mit einer lösbaren Halteschiene form- und/oder kraftschlüssig in einem Unterbau der Sockelleiste, welcher bevorzugt als im Wesentlichen L-förmige Profilleiste vorliegt, angebracht. Die Verwendung einer lösbaren Halteschiene stellt eine besonders zweckmässige Befestigungsvorrichtung dar. So ist sichergestellt, dass die Isolatorschiene auf ihrer gesamten Länge mit einem gleichmässigen Druck im Unterbau gehalten wird. Lokal vorliegende mechanische Spannungen in der Sockelleiste, welche beispielsweise durch starke Temperaturschwankungen entstehen können oder durch Unebenheiten an den Wänden bei der Montage der Sockelleiste erzeugt werden, können so bestmöglich ausgeglichen werden. Damit liegen die Isolatorschiene und/oder die Buchsen der integrierten Steckdosen relativ zum Unterbau in einer klar definierten Position vor. Die Lösbarkeit der Isolatorschiene erlaubt zudem auch einen einfachen Austausch der Stromleiter und/oder der Isolatorschiene.

Grundsätzlich ist es aber auch möglich, die Isolatorschiene durch eine Vielzahl von kurzen Befestigungselementen, beispielsweise in regelmässigen Abständen angebrachte Klemmbriden, zu fixieren. Ebenso kann die Isolatorschiene auch durch nicht lösbare Verbindungstechniken befestigt werden. Insbesondere geeignet hierfür sind Rastelemente, welche eine form- und/oder kraftschlüssige Verbindung zwischen Isolatorschiene und Unterbau ergeben. Auch möglich ist das stoffschlüssige Verbinden der Isolatorschiene mit dem Unterbau, beispielsweise durch Klebstoffe oder durch Verschweissung.

Die L-förmige Ausgestaltung des Unterbaus vereinfacht insbesondere die Montage an einer Wand. So kann der Unterbau mit dem horizontalen Schenkel des L-förmigen Profils auf den Boden aufgesetzt werden und dann an die zur Befestigung der Sockelleiste vorgesehene Wand geschoben werden, bis der vertikale Schenkel L-förmigen Profils des Unterbaus an der Wand anliegt. Anschliessend wird der Unterbau beispielsweise durch darin vorgesehene Befestigungsbohrungen mit Schrauben an der Wand fixiert. Aufgrund des L-förmigen Profils des Unterbaus bleibt der Innenbereich der Sockelleiste jedoch gut zugänglich, was die Montage der Isolatorschiene im Unterbau wesentlich vereinfacht.

Es ist aber auch möglich, einen anders geformten Unterbau vorzusehen. Insbesondere geeignet als Unterbau für die erfindungsgemässen Sockelleisten sind z. B. auch U-förmige Profile oder plattenartige Befestigungsschienen.

Besonders bevorzugt ist der Unterbau durch eine formschlüssig befestigte Aussenhülle verschlossen, wobei die Aussenhülle über mehrere Steckdosenöffnungen, insbesondere Bohrungen oder Schlitze, zum Einschieben von Steckerstiften verfügt, welche direkt über den Buchsen der integrierten Steckdosen angeordnet sind. Eine rein formschlüssig angebrachte Aussenhülle lässt sich insbesondere ohne Werkzeuge am Unterbau anbringen und/oder wieder von diesem entfernen.

Die Aussenhülle stellt zudem sicher, dass die im Betrieb Strom führenden und unter elektrischer Spannung stehenden Stromleiter von aussen nicht zugänglich sind und somit für Mensch und Tier keine Gefahr darstellen. Damit sind die erfindungsgemässen Sockelleisten im Besonderen geeignet für bewohnte Räumlichkeiten. Des Weiteren werden sämtliche Teile von Befestigungsvorrichtungen, wie z. B. Schraubenköpfe oder dergleichen, von aussen abgedeckt, was den ästhetischen Eindruck der Sockelleiste verbessert. Da die Steckdosenöffnungen, wie z. B. Bohrungen oder Schlitze, direkt über den Buchsen liegend angeordnet sind, liegen konstruktiv einfache Steckdosen vor, was die Herstellungskosten niedrig hält.

Bevorzugt werden die Steckdosenöffnungen in regelmässigen Abständen angeordnet, so dass beispielsweise alle 10 - 20 cm eine Steckdose in der Sockelleiste vorliegt.

Grundsätzlich ist es auch möglich, die Aussenhülle durch Befestigungsvorrichtungen, wie beispielsweise Schrauben oder Klammern, am Unterbau zu befestigen.

Besonders zweckmässig ist die Aussenhülle als Profilleiste mit einem vertikalen und einem horizontalen Schenkel ausgebildet, bei welcher der vertikale Schenkel über eine abgeschrägte Fläche mit dem horizontalen Schenkel verbunden ist, wobei die abgeschrägte Fläche bevorzugt einen Winkel von 30° zum horizontalen Schenkel aufweist. Damit wird eine scharfe Kante am Übergang zwischen horizontalem und vertikalem Schenkel, welche unter Umständen eine Verletzungsgefahr darstellt, vermieden. Zudem kann dadurch der Platzbedarf der Sockelleiste weiter reduziert werden, wodurch sich diese besser in den Raum integrieren lässt.

Es ist aber beispielsweise auch möglich, vollständig abgerundete Aussenhüllen oder Aussenhüllen mit reinem L-Profil zu verwenden. Ebenfalls geeignet sind Aussenhüllen in Form einer ebenen Abdeckplatte, so dass zusammen mit einem L-förmigen Unterbau eine Sockelleiste mit einem dreieckigen Querschnitt vorliegt.

Mit Vorteil sind die Steckdosenöffnungen zum Einschieben der Steckerstifte in der abgeschrägten Fläche der Aussenhülle eingebracht. Damit ist sichergestellt, dass die Steckdosenöffnungen von oben, bzw. aus der Blickrichtung eines Benutzers, gut sichtbar sind. Der Benutzer kann so einen Stecker problemlos in die Sockelleiste einstecken, auch wenn dieser asymmetrisch angeordnete Steckerstifte aufweist.

Prinzipiell können die Steckdosenöffnungen auch im vertikalen Schenkel der Aussenhülle angeordnet sein. Dabei besteht aber unter Umständen der Nachteil, dass die Steckdosenöffnungen aus der Blickrichtung des Benutzers nur schlecht erkennbar sind. Ebenso ist es möglich, die Steckdosenöffnungen auf dem horizontalen Schenkel der Aussenhülle vorzusehen. Diese wird aber meist so schmal als möglich ausgebildet, um die Sockelleiste nicht unnötig in den Raum hinein vorstehen zu lassen. Daher kann der horizontale Schenkel der Aussenhülle je nach Steckertyp so schmal sein, dass sich der Stecker aufgrund der geringen Distanz zur Wand nur noch schlecht ein- und ausstecken lässt. Grundsätzlich ist es aber auch möglich, in mehreren Seitenflächen der Aussenhülle Steckdosenöffnungen vorzusehen, um je nach Richtung und Höhe des anzuschliessenden elektrischen Geräts eine optimale Ausrichtung des Steckers zu erhalten.

Insbesondere sind wenigstens ein Teil der integrierten Steckdosen, insbesondere Steckdosen, welche nicht mit einem Stecker verbunden sind, durch eine lösbare in den Steckdosenöffnungen der Aussenhülle kraft- und/oder formschlüssig befestigte Abdeckleiste verschlossen. Dadurch sind insbesondere die nicht mit einem Stecker belegten Steckdosenöffnungen abgedeckt und verschlossen. Dies hat den Vorteil, dass beispielsweise Kleinkinder nicht in Lage sind, elektrisch leitende Gegenstände über die Steckdosenöffnungen in die unter Strom stehenden Buchsen einzuführen. Ebenso wird ein Verstauben der Buchsen und/oder Steckdosenöffnungen verhindert.

Da die Abdeckleiste kraft- und/oder formschlüssig befestigt ist, kann diese ohne Werkzeuge entfernt und wieder angebracht werden. Es hat sich als zudem besonders vorteilhaft erwiesen, bei der Montage der Sockelleiste eine der Länge der Sockelleiste angepasste Abdeckleiste anzubringen, welche sämtliche Steckdosenöffnungen abdeckt und über definierte Sollbruchlinien, welche insbesondere quer zu einer Längsrichtung der Sockelleiste verlaufen, verfügt. Wird eine Steckdose der Sockelleiste benötigt, so kann ein entsprechendes Teilstück aus der Abdeckleiste herausgebrochen werden, und die benötigte Steckdose ist frei zur Aufnahme des Steckers. Wird die besagte Steckdose zu einem späteren Zeitpunkt nicht mehr benötigt, kann das herausgebrochene Teilstück der Abdeckleiste wieder eingesetzt werden.

Aufgrund der Befestigung der Abdeckleiste in den Steckdosenöffnungen kann zudem auf weitere Befestigungsvorrichtungen, wie z. B. Bohrungen für Schrauben oder Schlitze für Klammern, verzichtet werden, was wiederum ökonomischer ist.

Bevorzugt ist unterhalb der Isolatorschiene ein Freiraum zur Aufnahme von Kabeln im Unterbau ausgebildet. Damit können zusätzliche Spezialkabel, z. B. Audio-, Video-, Telefon- und/oder Netzwerkkabel, innerhalb der Sockelleiste verlegt werden, wodurch die Funktionalität der Sockelleiste vergrössert wird.

Die vorstehend beschriebenen Sockelleisten lassen sich beispielsweise folgendermassen montieren:
a) an einer Isolatorschiene werden wenigstens zwei Stromleiter befestigt, wobei die wenigstens zwei Stromleiter kammförmig ausgebildet sind;
b) ein Unterbau der Sockelleiste, welcher bevorzugt L-förmig ausgebildet ist, wird in einem Sockelbereich einer Wand befestigt;
c) die Isolatorschiene mit den befestigten wenigstens zwei Stromleitern im Unterbau wird insbesondere mit einer Halterungsschiene form- und/oder kraftschlüssig angebracht;
d) der Unterbau mit der darin befestigten Isolatorschiene wird durch eine Aussenhülle mit Öffnungen für Steckerstifte formschlüssig verschlossen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Aufsicht auf zwei kammförmige und bandartige Stromleiter in käm- mender Anordnung;
- Fig. 2: eine Aufsicht auf zwei weitere kammförmige und bandartige Stromleiter in kämmender Anordnung;
- Fig. 3: eine erste Oberseite einer Isolatorschiene mit kammförmigen Vertiefungen zur Aufnahme von kammförmigen Stromleitern;
- Fig. 4: die der Oberseite der Isolatorschiene aus Fig. 3 gegenüberliegende Unter- seite, welche ebenfalls kammförmige Vertiefungen zur Aufnahme von kammförmigen Stromleitern aufweist;
- Fig. 5: ein Querschnitt entlang der Linie A - B durch die Isolatorschiene aus Fig. 3 und 4, wobei in den Vertiefungen auf den gegenüberliegenden Seiten der Isolatorschiene die kammförmigen Stromleiter aus Fig. 1 und 2 eingelassen sind;
- Fig. 6: eine Seitenansicht einer Buchse einer integrierten Steckdose der Sockel- leiste;
- Fig. 7: eine Ansicht der Buchse aus Fig. 6 von oben;
- Fig. 8: ein Längsschnitt durch die Isolatorscheine entlang der Linie B - C aus Fig. 3 und 4 mit eingelassenen Stromleitern und montierten Buchsen;
- Fig. 9: ein Querschnitt durch die Isolatorschiene mit Stromleitern und montierten Buchsen aus Fig. 8, eingebettet in eine Isolatorhülle;
- Fig. 10: eine Seitenansicht eines Unterbaus mit einem L-förmigen Profil, welcher über eine Nut zur teilweisen Aufnahme der Isolatorschiene mit Isolatorhülle aus Fig. 8 verfügt;
- Fig. 11: eine Halterungsschiene zur Befestigung der der Isolatorschiene mit Isola- torhülle aus Fig. 8 im Unterbau der Fig. 9;
- Fig. 12: eine Aussenhülle, welche zum Verschliessen des Unterbaus aus Fig. 10 vorgesehen ist und in Form einer im Wesentlichen L-förmigen Profilleiste vorliegt;
- Fig. 13: eine Aufsicht von vorne auf die Aussenhülle aus Fig. 12 mit sichtbaren Steckdosenöffnungen;
- Fig. 14: eine Profilansicht der vollständig bestückten und verschlossenen Sockel- leiste;
- Fig. 15: eine Abdeckleiste zum Verschliessen der Steckdosenöffnungen der Aus- senhülle aus Fig. 12 und 13 in der Profilansicht; und
- Fig. 16: die Abdeckleiste aus Fig. 15 in einer Aufsicht.

Grundsätzlich sind in den Figuren gleiche Teile mit gleichen Bezugszeichen versehen.

### Wege zur Ausführung der Erfindung

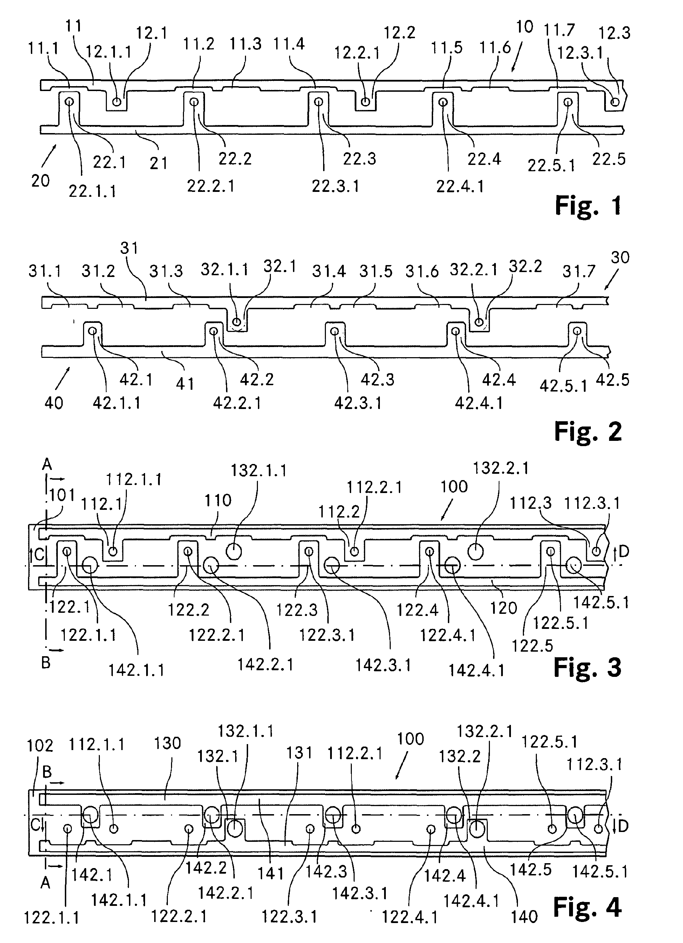

Fig. 1 zeigt eine Aufsicht auf einen ersten kammförmigen Stromleiter 10, welcher über ein geradliniges und bandartiges Rückgrat 11 verfügt, von welchem in regelmässigen Abständen drei identisch dimensionierte zinkenförmige Vorstände 12.1, 12.2, 12.3 nach unten abstehen. Das bandartige Rückgrat 11 weist einen in Fig. 1 nicht sichtbaren und im Wesentlichen rechteckigen Querschnitt auf. Die drei zinkenförmigen Vorstände 12.1, 12.2, 12.3 sind in der Aufsicht ungefähr quadratisch ausgebildet und senkrecht zur Längsrichtung des Rückgrats 11 angeordnet. Jeder der drei zinkenförmigen Vorstände 12.1, 12.2, 12.3 weist ungefähr in der Mitte eine durchgehende Befestigungsbohrung 12.1.1, 12.2.1, 2.3.1 zur Befestigung von Buchsen auf. Links vom ersten zinkenförmigen Vorstand 12.1, im Bereich des linken Endes des Stromleiters 10, ist eine längliche Ausnehmung 11.1 auf der Seite des ersten zinkenförmigem Vorstand 12.1 im Rückgrat 11 eingebracht. Die längliche Ausnehmung 11.1 weist eine Länge auf, welche ca. der anderthalbfachen Breite des ersten zinkenförmigen Vorstands 12.1 entspricht. Zwischen dem ersten zinkenförmigen Vorstand 12.1 und dem zweiten zinkenförmigen Vorstand 12.2 sind drei identisch zur ersten länglichen Ausnehmung 11.1 dimensionierte weitere längliche Ausnehmungen 11.2, 11.3, 11.4 im Rückgrat 11 eingelassen. Ebenso liegen zwischen dem zweiten zinkenförmigen Vorstand 12.2 und dem dritten zinkenförmigen Vorstand 12.3 zusätzliche längliche Ausnehmungen 11.5, 11.6, 11.7 vor.

Unterhalb des ersten kammförmigen Stromleiters 10 ist ein zweiter kammförmiger Stromleiter 20 dargestellt, welcher dem ersten kammförmigen Stromleiter 10 direkt gegenüberliegend angeordnet ist. Der zweite kammförmige Stromleiter 20 verfügt ebenfalls über ein geradliniges und bandartiges Rückgrat 21, von welchem in regelmässigen Abständen fünf identisch dimensionierte zinkenförmige Vorstände 22.1, 22.2, ...22.5 nach oben abstehen.

Die fünf zinkenförmigen Vorstände 22.1, 22.2, ...22.5 sind in der Aufsicht rechteckig ausgebildet und senkrecht zur Längsrichtung des Rückgrats 21 angeordnet. Jeder der fünf zinkenförmigen Vorstände 22.1, 22.2, ...22.5 weist ungefähr mittig im Bereich des freien Endes eine durchgehende Befestigungsbohrung 22.1.1, 22.2.1, ... 22.5.1 zur Befestigung von Buchsen auf.

Der erste kammförmige Stromleiter 10 und der zweite kammförmige Stromleiter 20 sind in Fig. 1 parallel und miteinander kämmend angeordnet. So ragt der erste zinkenförmige Vorstand 12.1 des ersten kammförmigen Stromleiters 10 in den Freiraum zwischen die ersten beiden zinkenförmigen Vorstände 22.1, 22.2 des zweiten kammförmigen Stromleiters 20. Der zweite zinkenförmige Vorstand 12.2 des ersten kammförmigen Stromleiters 10 ragt entsprechend in den Freiraum zwischen den dritten zinkenförmigen Vorstand 22.3 und den vierten zinkenförmigen Vorstand 22.4 des zweiten kammförmigen Stromleiters 20. Der dritte zinkenförmige Vorstand 12.3 des ersten kammförmigen Stromleiters 10 ragt rechts neben dem fünften zinkenförmigen Vorstand 22.5 des zweiten Stromleiters 22 nach unten. Des Weiteren ist der erste zinkenförmige Vorstand 22.1 des zweiten Stromleiters 20 direkt gegenüberliegend zur ersten länglichen Ausnehmung 11.1 des ersten Stromleiters 10 angeordnet. Der zweite zinkenförmige Vorstand 22.2 des zweiten Stromleiters 20 ist entsprechend auf die zweite längliche Ausnehmung 11.2 des ersten Stromleiters ausgerichtet, während der dritte zinkenförmige Vorstand 22.3 des zweiten Stromleiters 20 auf die vierte längliche Ausnehmung 11.4 des ersten Stromleiters 10 ausgerichtet ist. Analog dazu ist der vierte zinkenförmige Vorstand 22.4 des zweiten Stromleiters 20 auf die fünfte längliche Ausnehmung 11.5 des ersten Stromleiters 10 ausgerichtet und der fünfte zinkenförmige Vorstand 22.5 des zweiten Stromleiters 20 ist auf die siebte längliche Ausnehmung 11.7 des ersten Stromleiters 10 ausgerichtet. Damit wird erreicht, dass die Befestigungsbohrungen 12.1.1, 12.2.1, 12.3.1 des ersten Stromleiters 10 und die Befestigungsbohrungen 22.1.1, 22.2.1, ... 22.5.1 des zweiten Stromleiters auf einer gemeinsamen Linie, welche parallel zu den beiden Rückgraten 11, 21 der ersten beiden Stromleiter 10, 20 verläuft, angeordnet sind.

In Fig. 2 ist eine Aufsicht auf einen dritten kammförmigen Stromleiter 30 gezeigt, welcher ebenfalls über ein geradliniges und bandartiges Rückgrat 31 verfügt, von welchem in regelmässigen Abständen zwei identisch dimensionierte zinkenförmige Vorstände 32.1, 32.2 nach unten abstehen. Das bandartige Rückgrat 31 weist einen in Fig. 2 nicht sichtbaren und im Wesentlichen rechteckigen Querschnitt auf. Die zwei zinkenförmigen Vorstände 32.1, 32.2 sind in der Aufsicht rechteckig ausgebildet und senkrecht zur Längsrichtung des Rückgrats 31 angeordnet. Ihre Breite entspricht der Breite der zinkenförmigen Vorstände 12.1, 12.2, 12.3 des ersten Stromleiters 10. Links des ersten zinkenförmigen Vorstands 32.1 sind drei längliche Ausnehmungen 31.1, 31.2, 31.3 im Rückgrat 31 des dritten Stromleiters angeordnet, welche identische Dimensionen aufweisen wie die sieben länglichen Ausnehmungen 11.1, 11.2, ... 11.7 des ersten Stromleiters 10. Zwischen dem ersten zinkenförmigen Vorstand 32.1 und dem zweiten zinkenförmigen Vorstand 32.2 des dritten Stromleiters 30 sind drei weitere und identische längliche Ausnehmungen 31.4, 31.5, 31.6 im Rückgrat des Stromleiters 30 eingelassen. Rechts des zweiten zinkenförmigen Vorstands 32.2 des dritten Stromleiters 30 ist eine siebte längliche Ausnehmung 31.7 angeordnet.

Der im unteren Bereich der Fig. 2 dargestellte vierte Stromleiter 40 ist im Wesentlichen baugleich mit dem zweiten Stromleiter 20 aus Fig. 1. Die fünf zinkenförmigen Vorstände 42.1, 42.2, ...42.5 des vierten Stromleiters 40 sind jedoch verglichen mit den fünf zinkenförmigen Vorständen 22.1, 22.2, ... 22.5 des zweiten Stromleiters 20 kürzer ausgebildet.

Der dritte kammförmige Stromleiter 30 und der vierte kammförmige Stromleiter 40 sind in Fig. 2 parallel und miteinander kämmend angeordnet. So ragt der erste zinkenförmige Vorstand 32.1 des dritten Stromleiters 30 direkt rechts neben dem zweiten zinkenförmigen Vorstand 42.2 des vierten Stromleiters 40 nach unten. Der zweite zinkenförmige Vorstand 32.2 des dritten Stromleiters 30 ragt in gleicher Weise direkt rechts neben dem vierten zinkenförmigen Vorstand 42.4 des vierten Stromleiters 40 nach unten. Die fünf zinkenförmigen Vorstände 42.1, 42.2, ... 42.5 des vierten Stromleiters 40 sind zudem jeweils auf Bereiche zwischen den sieben länglichen Ausnehmungen 31.1, 31.2, ... 31.7 des Rückgrats 31 des dritten Stromleiters 30 gerichtet. Die zwei Befestigungsbohrungen 32.1.1, 32.2.1 in den beiden zinkenförmigen Vorständen 32.1, 32.2 des dritten Stromleiters 30 sind dabei oberhalb einer gedachten Mittellinie zwischen dem dritten Stromleiter 30 und dem vierten Stromleiter 40 angeordnet. Die fünf Befestigungsbohrungen 42.1.1, 42.2.1, ... 42.5.1 der fünf zinkenförmigen Vorstände 42.1, 42.2, ... 42.5 des vierten Stromleiters 40 sind entsprechend unterhalb einer gedachten Mittellinie zwischen dem dritten Stromleiter 30 und dem vierten Stromleiter 40 angeordnet.

In Fig. 3 ist eine Aufsicht auf die Oberseite 101 einer Isolatorschiene 100 gezeigt, welche als im Querschnitt rechteckige Profilleiste ausgebildet ist. Die Oberseite 101 weist dabei im Bereich der oberen Kante eine erste kammförmige Vertiefung 110 auf, welche eine zur ersten Stromschiene 10 komplementäre Form aufweist. Im Bereich der unteren Kante ist eine zweite kammförmige Vertiefung 120 eingebracht, welche eine zur zweiten Stromschiene 20 komplementäre Form aufweist. In jedem der drei zinkenförmig vorstehenden Bereiche 112.1, 112.2, 112.3 der ersten Vertiefung 110 ist dabei ungefähr mittig je eine Bohrung 112.1.1, 112.2.1, 112.3.1 angebracht, welche die Isolatorschiene 100 vollständig durchdringt und zur Kommunikation mit den drei Befestigungsbohrungen 12.1.1, 12.2.1, 12.3.1 in den zinkenförmigen Vorständen 12.1, 12.2, 22.3 des ersten Stromleiters 10 vorgesehen ist. Entsprechend ist in jedem der fünf zinkenförmig vorstehenden Bereichen 122.1, 122.2, 122.3 der zweiten Vertiefung 120 je eine Bohrung 122.1.1, 122.2.1, ... 122.5.1 angebracht, welche die Isolatorschiene 100 ebenfalls vollständig durchdringt und zur Kommunikation mit den fünf Befestigungsbohrungen 22.1.1, 22.2.1, ... 12.5.1 in den zinkenförmigen Vorständen 22.1, 22.2, ... 22.5 des zweiten Stromleiters 20 vorgesehen ist.

Die beiden Vertiefungen 110, 120 auf der Oberseite 101 der Isolatorschiene sind so angebracht, dass darin die ersten beiden Stromschienen 10, 20 in der in Fig. 1 beschriebenen Anordnung auf der Oberseite 101 der Isolatorschiene 100 vollständig eingelassen werden können.

Des Weiteren ist zwischen dem ersten zinkenförmigen Bereich 122.1 der zweiten Vertiefung 120 und dem ersten zinkenförmigen Bereich 112.1 der ersten Vertiefung 110 eine erste zylinderförmige Durchführung 142.1.1 für eine Buchse einer Steckdose angeordnet. Rechts des zweiten zinkenförmigen Bereichs 122.2 der zweiten Vertiefung 120 sind eine zweite zylinderförmige Durchführung 142.2.1 und eine dritte zylinderförmige Durchführung 132.1.1 für Buchsen einer Steckdose eingebracht. Zwischen dem dritten zinkenförmigen Bereich 122.3 der zweiten Vertiefung 120 und dem zweiten zinkenförmigen Bereich 112.2 der ersten Vertiefung 110 ist eine vierte zylinderförmige Durchführung 142.3.1 für eine Buchse einer Steckdose angeordnet. Entsprechend sind rechts des vierten zinkenförmigen Bereichs 122.4 der zweiten Vertiefung 120 eine fünfte Durchführung 142.4.1 und eine sechste Durchführung 132.2.1 für Buchsen einer Steckdose eingebracht. Zwischen dem fünften zinkenförmigen Bereich 122.5 der zweiten Vertiefung 120 und dem dritten zinkenförmigen Bereich 112.3 der ersten Vertiefung 110 ist eine siebte zylinderförmige Durchführung 142.5.1 für eine Buchse einer Steckdose in der Isolatorschiene 100 angeordnet. Die sieben zylinderförmigen Durchführungen 132.1.1, 132.2.1, 142.1.1, 142.2.1, ...142.5.1 weisen dabei einen Durchmesser von beispielsweise 6.2 mm auf, während die Bohrungen 112.1, 112.2, 112.3, 122.1.1, 122.2.1, ...122.5.1 der beiden Vertiefungen 110, 120 beispielsweise einen Durchmesser von 3.2 mm aufweisen.

Fig. 4 zeigt die Unterseite 102 der Isolatorschiene 100, welche der Vorderseite 101 genau gegenüberliegend angeordnet ist. Die Unterseite 102 weist dabei im Bereich der unteren Kante eine dritte kammförmige Vertiefung 130 auf, welche eine zum dritten Stromleiter 30 komplementäre Form aufweist. Im Bereich der oberen Kante ist eine vierte kammförmige Vertiefung 140 eingebracht, welche eine zur vierten Stromschiene 40 komplementäre Form aufweist. Im ersten zinkenförmig vorstehenden Bereich 132.1 der dritten Vertiefung 130 mündet die dritte Durchführung 132.1.1 von der Oberseite 101 aus der Isolatorschiene 100 heraus. Im zweiten zinkenförmig hervorstehenden Bereich 132.2 der dritten Vertiefung 130 mündet die sechste Durchführung 132.2.1 ebenfalls von der Oberseite 101 aus der der Isolatorschiene 100 heraus. Ebenso mündet die erste Durchführung 142.1.1 in den ersten zinkenförmigen Bereich 142.1 der vierten Vertiefung 140, während die zweite Durchführung 142.2.1 in den zweiten zinkenförmigen Bereich 142.2 der Vertiefung 140 mündet. In gleicher Weise mündet die vierte Durchführung 142.3.1 in den dritten zinkenförmigen Bereich 142.3 der Vertiefung 140 und die fünfte Durchführung 142.4.1 in den vierten zinkenförmigen Bereich 142.4 der vierten Vertiefung 140. Die sechste Durchführung 142.5.1 mündet in den fünften zinkenförmigen Bereich 142.5 der vierten Vertiefung 140.

Die beiden Vertiefungen 130, 140 auf der Unterseite 102 der Isolatorschiene sind so angebracht, dass darin die dritte Stromschiene 30 und die vierte Stromschiene 40 in der in Fig. 2 beschriebenen Anordnung auf der Unterseite 102 der Isolatorschiene 100 vollständig eingelassen werden können.

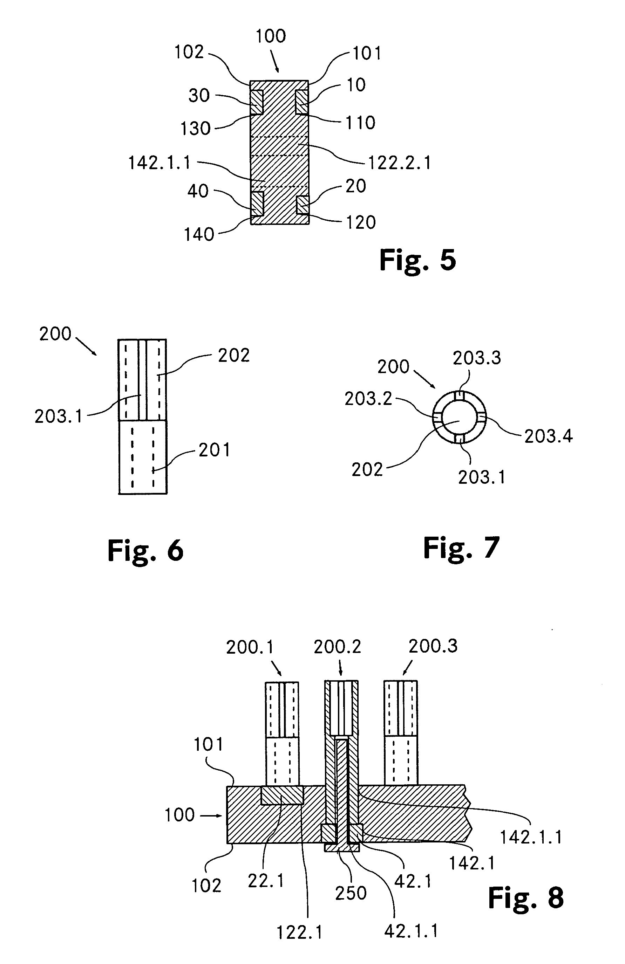

Fig. 5 zeigt einen Querschnitt entlang der Linie A - B durch die Isolatorschiene 100. In der ersten Vertiefung 110 an der Oberseite 101 der Isolatorschiene 100 ist dabei der erste Stromleiter 10 aus Fig. 1 vollständig eingelassen. Der zweite Stromleiter 20 aus Fig. 1 liegt zudem in der zweiten Vertiefung 120 an der Oberseite 101 vor. An der Unterseite 102 der Isolatorschiene 100 sind entsprechend der dritte Stromleiter 30 in der dritten Vertiefung 130 und der vierte Stromleiter 40 in der vierten Vertiefung 140 der Isolatorschiene 100 eingebettet. Aufgrund der komplementären Formen der vier Stromleiter 10, 20, 30, 40 und der jeweils zugehörigen Vertiefungen 110, 120, 130, 140, ist der Querschnitt der Isolatorschiene 100 mit den eingebetteten Stromleiten 10, 20, 30, 40 vollständig rechteckig ausgeformt.

In Fig. 6 ist als Beispiel eine Seitenansicht einer Buchse 200 aus Metall zur Kontaktierung eines nicht dargestellten Steckerstifts gezeigt. Die Buchse 200 weist eine zylindrische Aussenform mit einem Aussendurchmesser von z. B. 6 mm auf. In der unteren Hälfte ist mittig und entlang der Längsachse der Buchse 200 eine nach unten offene Schraubbohrung 201 mit einem Innengewinde mit beispielsweise einem metrischen M3-Gewinde mit 3 mm Innendurchmesser eingebracht. In der oberen Hälfte ist in der gleichen Richtung eine nach oben offene obere Bohrung 202, beispielsweise mit einem Innendurchmesser von 4 mm, zur Aufnahme des nicht dargestellten Steckerstifts angeordnet. Entlang der Aussenwand der oberen Bohrung 202 verläuft ein erster rechteckförmiger Schlitz 203.1 auf der gesamten Länge der oberen Bohrung 202.

Wie aus der in Fig. 7 abgebildeten Ansicht von oben auf die Buche 200 ersichtlich ist, sind insgesamt vier rechteckförmige Schlitze 203.1, 203.2, 203.3, 203.4 in symmetrischer Weise in der Aussenwand der Bohrung 202 eingebracht. Die vier rechteckförmigen Schlitze 203.1, 203.2, 203.3, 203.4 ermöglichen beim Einführen eines Steckerstifts, welcher einen etwas grösseren Aussendurchmesser als der Innendurchmesser der oberen Bohrung 202 aufweist, eine geringe Vergrösserung des Innendurchmessers der oberen Bohrung 202. Dadurch wird eine Klemmwirkung zwischen Buchse 200 und Steckerstift erhalten.

In Fig. 8 ist ein Längsschnitt entlang der Linie C - D durch den linken Bereich der Isolatorschiene 100 dargestellt. Die vier Stromleiter 10, 20, 30, 40 sind dabei wie bei Fig. 5 beschrieben in den vier Vertiefungen 110, 120, 130, 140 der Isolatorschiene 100 eingebracht. Zusätzlich ist am ersten zinkenförmigen Vorstand 22.1 des zweiten Stromleiters 20 eine erste montierte Buchse 200.1, welche baugleich ist mit der Buchse 200 aus Fig. 5 und 6, angebracht. Die erste montierte Buchse ist durch eine in Fig. 8 nicht sichtbare erste Schraube befestigt, wobei die nicht sichtbare Schraube von der Unterseite 102 der Isolatorschiene durch die erste Bohrung 122.1.1 der Isolatorschiene 100 und die darüber liegende erste Befestigungsbohrung 22.1.1 des zweiten Stromleiters 20 (nicht sichtbar) in der Schraubenöffnung der ersten montierten Buchse 200.1 verschraubt ist.

Rechts daneben ist eine zweite montierte Buchse 200.2 von der Oberseite 101 der Isolatorschiene 100 in die erste zylinderförmigen Durchführung 142.1.1 der Isolatorschiene eingesetzt, wobei die zweite Buchse 200.2 im unteren Bereich auf dem ersten zinkenförmigen Vorstand 42.1 des vierten Stromleiter 40 aufliegt. Eine zweite Schraube 250 ist dabei durch die Befestigungsbohrung 42.1.1 des ersten zinkenförmigen Vorstands 42.1 des vierten Stromleiters 40 von der Unterseite 102 der Isolatorschiene 100 her in die Schraubenöffnung der zweiten montierten Buchse 200.2 eingeschraubt und fixiert diese. Die zweite montierte Buchse 200.2 ist dabei im Wesentlichen baugleich mit der Buchse 200 aus Fig. 6 und 7, weist aber einen längeren unteren Bereich mit Schraubenöffnung auf, so dass die zweite montierte Buchse 200.2 um die gleiche Distanz wie die erste montierte Buchse 200.1 von der Oberseite 101 der Isolatorschiene nach oben ragt.

Rechts neben der zweiten montierten Buchse 200.2 ist eine dritte montierte Buchse 200.3 angebracht, welche ebenfalls baugleich ist mit der Buchse 200 aus Fig. 6 und 7. Die dritte montierte Buchse 200.3 ist an der Oberseite 102 der Isolatorschiene 100 mit dem ersten zinkenförmigen Vorstand 12.1 der ersten Isolatorschiene 100 verschraubt und elektrisch verbunden (nicht sichtbar).

Die übrigen Befestigungsbohrungen der vier Stromleiter 10, 20, 30, 40 sind in analoger Weise mit weiteren Buchsen bestückt.

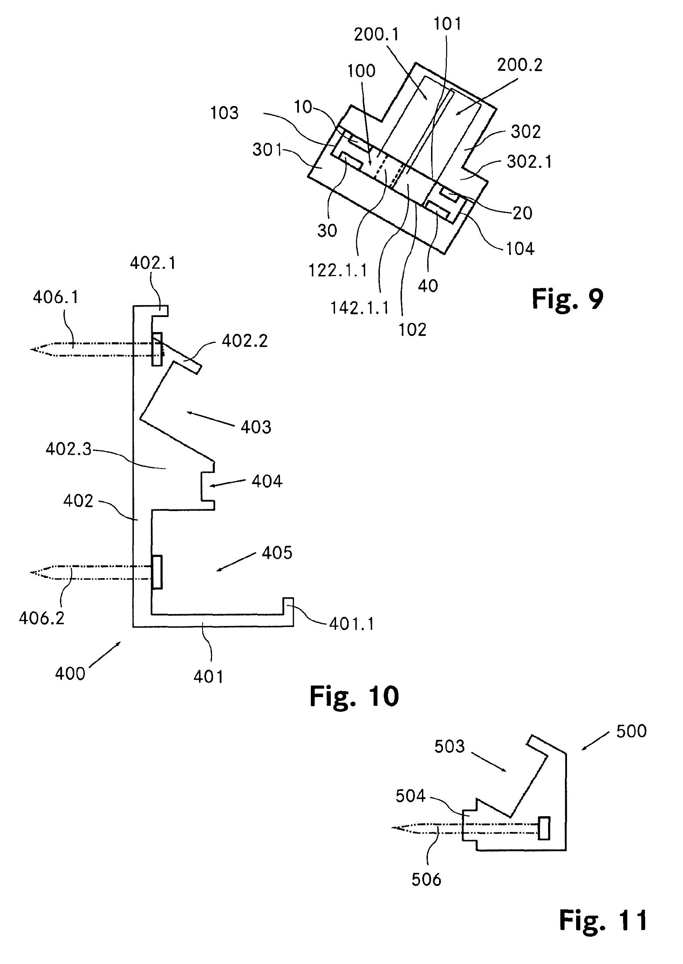

In Fig. 9 ist ein Querschnitt entlang der Linie A - B (Fig. 3 und 4) durch die Isolatorschiene 100 aus Fig. 8 mit den vier eingelassenen Stromleitern 10, 20, 30, 40 und den montierten Buchsen 200.1, 200.2, 200.3 dargestellt. Der Übersichtlichkeit halber wurde auf Schraffuren verzichtet. Unterhalb der Isolatorschiene 100 ist dabei ein elektrisch isolierendes U-förmiges Abdeckprofil 301 angebracht, z. B. aus Polyvinylchlorid, welches die Unterseite 102 der Isolatorschiene 100 und die zwei senkrecht dazu stehenden Seitenflächen 103, 104 der Isolatorschiene 100 vollständig aufnimmt. Oberhalb ist eine elektrisch isolierende Buchsenummantelung 302 angebracht, welche im oberen Bereich der montierten Buchsen 200.1, 200.2, 200.3, ... als quaderförmige Profilleiste ausgeformt ist, welche über Bohrungen zur Aufnahme der montierten Buchsen 200.1, 200.2, 200.3 verfügt. Im unteren Bereich der Buchsenummantelung 302 weist diese entlang der beiden Längsseiten einen rechtwinklig abstehenden Kragenbereich 302.1 auf, welcher der Breite der Isolatorschiene 100 entspricht und auf deren Oberseite 101 aufliegt. Damit ist die gesamte Isolatorschiene 100 aussenseitig entlang ihrer gesamten Länge elektrisch isolierend eingebettet. Die auf der Isolatorschiene 100 montierten ersten drei Buchsen 200.1, 200.2, 200.3, sowie die weiteren Buchsen sind zudem quer zur Längsrichtung ebenfalls abgedeckt.

Fig. 10 zeigt einen Unterbau 400, welcher zur Aufnahme der eingebetteten Isolatorschiene 100 aus Fig. 9 vorgesehen ist. Der Unterbau 400 besteht dabei aus einem im Wesentlichen L-förmigen Profil mit einem unten angeordneten horizontalen Schenkel 401 und linksseitig einem senkrecht dazu angebrachten vertikalen Schenkel 402. Am freien Ende des horizontalen Schenkels 401 liegt eine senkrecht nach oben ragende quaderförmige Feder 401.1 zur Befestigung einer Aussenhülle vor. Eine identisch ausgeformte und nach rechts ragende quaderförmige Feder 402.1 ist am freien Ende des vertikalen Schenkels 402 angebracht und hat den gleichen Zweck wie die nach oben ragende quaderförmige Feder 401.1. Im oberen Bereich des vertikalen Schenkels 402.2 ist innenseitig zudem ein Vorstand 402.3 mit einer oberen und unter einem Winkel von ca. 30° schräg nach unten ausgerichteten Nut 403 angeordnet. Die schräg nach unten ausgerichtete Nut 403 ist dabei zur Aufnahme des linken unteren Bereichs der eingebetteten Isolatorschiene 100 aus Fig. 9 vorgesehen und weist entsprechend angepasste Dimensionen auf. Unterhalb der schräg nach unten ausgerichteten Nut 403 liegt in einem vorderen und vertikalen Bereich des Vorstands 402.3 eine vertikal ausgerichtete Rechtecksnut 404 vor. Unterhalb des Vorstands 402.3 ist im Unterbau 400 ein im Wesentlichen rechteckförmiger Freiraum 405, z. B. als Kabelkanal, ausgebildet. Der Unterbau lässt sich mit einer ersten Befestigungsschraube 406.1, welche oberhalb der schräg nach unten ausgerichteten Nut 403 in einer Richtung entgegen dem horizontalen Schenkel 401 durch eine nicht dargestellte Bohrung im vertikalen Schenkel durchgeführt wird, in einer Wand befestigen. Des Weiteren ist unterhalb des Vorstands 402.3 im Freiraum 405 eine zweite Befestigungsschraube 406.2 in gleicher Wiese durch den vertikalen Schenkel 402 durchgeführt und ebenfalls in der Wand fixiert. Weitere nicht dargestellte Schrauben sind in regelmässigen Abständen in analoger Weise angeordnet und zur Befestigung des Unterbaus 400 auf seiner gesamten Länge vorgesehen.

In Fig. 11 ist eine Halteschiene 500 dargestellt, welche zur Befestigung der eingebetteten Isolatorschiene 100 aus Fig. 9 im Unterbau aus Fig. 10 vorgesehen ist. Die Halteschiene 500 weist im oberen Bereich eine unter einem Winkel von ca. 30° schräg nach oben links ausgerichtete Nut 503 auf. Die schräg nach oben links ausgerichtete Nut 503 ist dabei zur Aufnahme des rechten unteren Bereichs der eingebetteten Isolatorschiene 100 aus Fig. 9 vorgesehen und weist entsprechend angepasste Dimensionen auf. Unterhalb der schräg nach oben links ausgerichteten Nut 503 liegt in einem linksseitigen vertikalen Bereich der Halteschiene 500 eine rechteckförmige Feder 504 vor, welche eine zur vertikal ausgerichteten Rechtecksnut 404 des Unterbaus 400 aus Fig. 10 komplementäre Form aufweist. Durch die rechteckförmige Feder 504 hindurch verläuft in horizontaler Richtung eine Befestigungsschraube 506, welche zur Befestigung der Halteschiene 500 am Vorstand 402.3 des Unterbaus 400 vorgesehen ist.

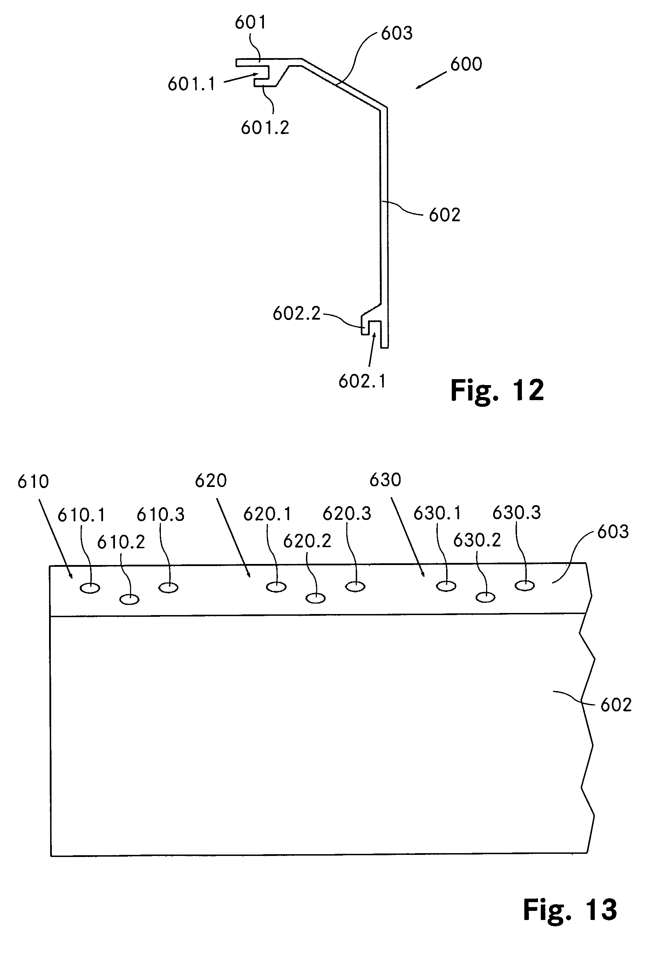

Fig. 12 zeigt eine Aussenhülle 600 in der Profilansicht, welche zum Verschliessen des Unterbaus 400 aus Fig. 10 dient. Die Aussenhülle 600 ist als Profilleiste mit einem nach links ragenden horizontalen Schenkel 601 und einem nach unten ragenden vertikalen Schenkel 602 ausgebildet, wobei die beiden Schenkel über eine abgeschrägte Fläche 603 miteinander verbunden sind. Die abgeschrägte Fläche 603 weist dabei zum horizontalen Schenkel 601 einen Winkel von ca. 30° auf. Im Bereich des freien Endes des horizontalen Schenkels 601 ist innenseitig ein Vorsprung 601.2 angeordnet, welcher über eine zum freien Ende des horizontalen Schenkels 601 hin ausgerichtete horizontale Rechtecksnut 601.1 verfügt.

Die horizontale Rechtecksnut 601.1 ist dabei zur Aufnahme der nach rechts ragenden Feder 402.1 des vertikalen Schenkels 402 des Unterbaus 400 vorgesehen und entsprechend dimensioniert. Ebenso ist im Bereich des freien Endes des vertikalen Schenkels 602 innenseitig ein Vorsprung 602.2 angeordnet, welcher über eine zum freien Ende des vertikalen Schenkels 602 hin ausgerichtete vertikale Rechtecksnut 602.1 verfügt. Die vertikale Rechtecksnut 602.1 ist zur Aufnahme der nach rechts ragenden Feder 401.1 des horizontalen Schenkels 401 des Unterbaus 400 vorgesehen und entsprechend dimensioniert.

Eine Aufsicht auf das linke Ende der Aussenhülle 600 aus Fig. 12 ist in Fig. 13 gegeben. Im unteren Bereich ist der rechteckförmige vertikale Schenkel 602 der Aussenhülle dargestellt. An der horizontalen Oberkante des vertikalen Schenkels 602 grenzt die ebenfalls rechteckförmige abgeschrägte Fläche 603, welche im linken Bereich eine erste integrierte Steckdose 610 aufweist. Diese besteht aus drei runden Steckdosenöffnungen 610.1, 610.2, 610.3. Die erste runde Steckdosenöffnung 610.1 ist dabei links oberhalb der zweiten runden Steckdosenöffnung 610.2 angeordnet. Rechts oberhalb der zweiten runden Steckdosenöffnung 610.2 ist die dritte runde Steckdosenöffnung 610.3 angebracht, welche mit der ersten runden Steckdosenöffnung 610.1 auf einer horizontalen Linie liegt. Die drei Steckdosenöffnungen 610.1, 610.2, 610.3 der ersten Steckdose 610 weisen dabei in horizontaler Richtung untereinander einen Abstand von 9.5 mm auf. Die Durchmesser der drei Steckdosenöffnungen 610.1, 610.2, 610.3 der ersten Steckdose 610 betragen beispielsweise ca. 6.2 mm. In einem Abstand von ca. 50 mm ist rechts der ersten Steckdose 610 eine zweite Steckdose 620 angeordnet. Die drei Steckdosenöffnungen 620.1, 620.2, 620.3 der zweiten Steckdose 620 sind analog zu den drei Steckdosenöffnungen 610.1, 610.2, 610.3 der ersten Steckdose 610 ausgebildet. Rechts der zweiten Steckdose 620 ist eine dritte Steckdose 630 angeordnet, wobei die drei Steckdosenöffnungen 630.1, 630.2, 630.3 der dritten Steckdose 630 ebenfalls analog zu den drei Steckdosenöffnungen 610.1, 610.2, 610.3 der ersten Steckdose 610 ausgebildet sind.

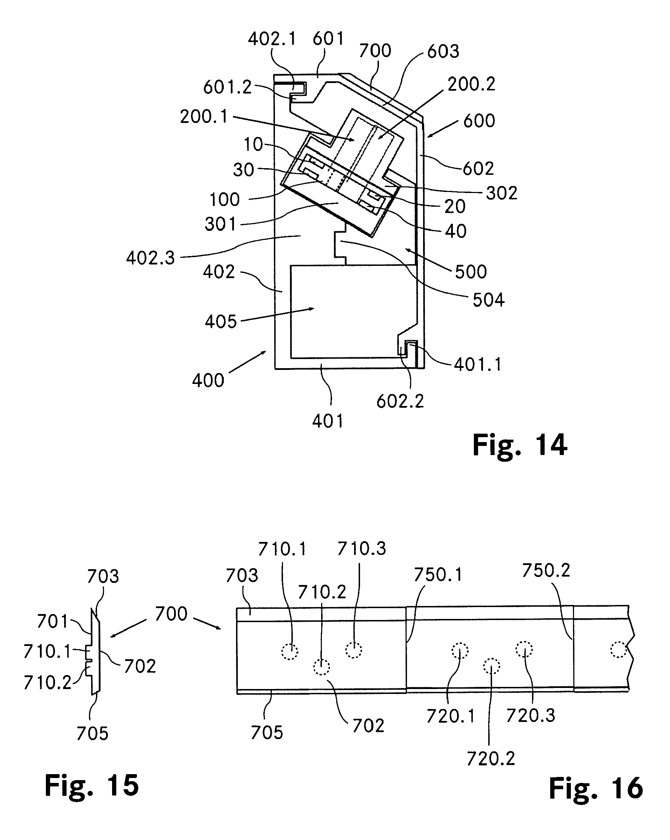

In Fig. 14 ist eine erfindungsgemässe und vollständig zusammengebaute Steckdosenleiste abgebildet. Im Unterbau 400 aus Fig. 10 ist die eingebettete Isolatorschiene 100 aus Fig. 9 in der schräg nach unten ausgerichteten Nut 403 eingebracht und wird durch die Halteschiene 500 aus Fig. 11, welche mit ihrer Feder 504 in die vertikal ausgerichtete Rechtecksnut 404 des Unterbaus 400 eingreift, form- und kraftschlüssig fixiert. Die eingebettete Isolatorschiene 100 aus Fig. 9 ist dabei unter einem Winkel von 30° zum horizontalen Schenkel 601 der Aussenhülle 600 angeordnet. Der Unterbau 400 ist des Weiteren durch die Aussenhülle 600 aus Fig. 12 verschlossen. Dabei greift die senkrecht nach oben ragende quaderförmige Feder 401.1 des Unterbaus 400 in die vertikale Rechtecksnut 602.1 der Aussenhülle 600 ein. In gleicher Weise greift die nach rechts ragende Feder 402.1 des Unterbaus 400 in die horizontale Rechtecksnut 601.1 der Aussenhülle 600 ein, wodurch eine formschlüssige Verbindung zwischen Aussenhülle 600 und Unterbau 400 vorliegt. Zusätzlich liegt auf der abgeschrägten Fläche 603 der Aussenhülle 600 eine Abdeckleiste 700 vor, welche die abgeschrägte Fläche 603 auf ihrer gesamten Breite und Länge abdeckt.

Die in Fig. 13 abgebildete erste Steckdosenöffnung 610.1 ist in der vollständig zusammengebauten Steckdosenleiste der Fig. 14 auf die auf dem zweiten Stromleiter 20 montierte erste Buchse 200.1 gerichtet. Die zweite Steckdosenöffnung 610.2 ist auf die auf dem vierten Stromleiter 40 montierte zweite Buchse 200.2 gerichtet, die dritte Steckdosenöffnung entsprechend auf die auf dem ersten Stromleiter 10 montierte dritte Buchse 200.3. Die erste Steckdose 610 ermöglicht daher elektrischen Kontakt mit dem ersten Stromleiter 10, dem zweiten Stromleiter 20 und dem vierten Stromleiter 40.

Die zweite Steckdose 620 entspricht im Wesentlichen der ersten Steckdose 610. Die dritte Steckdosenöffnung 620.3 der zweiten Steckdose 620 ist aber auf eine Buchse gerichtet, welche auf dem ersten zinkenförmigen Vorstand 32.1 des dritten Stromleiters 30 angebracht ist. Daher ermöglicht die zweite Steckdose 620 elektrischen Kontakt mit dem zweiten Stromleiter 20, dem dritten Stromleiter 30 und dem vierten Stromleiter 40.

Die dritte Steckdose 620 ist wiederum wie die erste Steckdose 610 ausgebildet und ermöglicht daher elektrischen Kontakt mit dem ersten Stromleiter 10, dem zweiten Stromleiter 20 und dem vierten Stromleiter 40. Die nächste Steckdose ist wiederum wie die zweite Steckdose 620 ausgebildet. Damit stehen alternierend zwei unterschiedlich ausgebildete Steckdosen zur Verfügung. Somit ist es beispielsweise möglich, zwei unabhängig voneinander ansteuerbare und/oder schaltbare Stromkreise zu realisieren.

Fig. 15 und 16 zeigen eine Profilansicht, sowie eine Aufsicht des linken Endes der Abdeckleiste 700 aus Fig. 14. Diese ist als im Wesentlichen rechteckige Leiste ausgebildet, welche an der oberen Längskante eine obere Fase 703 aufweist. In horizontaler Richtung liegen in regelmässigen Abständen von ca. 50 mm an der Vorderseite 702 der Abdeckleiste eine erste Sollbruchstelle 750.1 und eine zweite Sollbruchstelle 750.2 vor, welche als senkrecht zur Längsrichtung der Abdeckleiste 700 verlaufenden Einkerbungen ausgebildet sind. Weitere Sollbruchstellen liegen im nicht dargestellten rechten Bereich der Abdeckleiste 700. Im Bereich zwischen dem linken Ende der Abdeckleiste 700 und der ersten Sollbruchstelle 750.1 sind drei erste zylindrische Ausbuchtungen 710.1, 710.2, 710.3 an der Hinterseite 701 der Abdeckleiste 700 angebracht. Die Anordnung der drei ersten zylindrische Ausbuchtungen 710.1, 710.2, 710.3 entspricht dabei der Anordnung der drei runden Steckdosenöffnungen 610.1, 610.2, 610.3 der Aussenhülle 600, welche in Fig. 13 abgebildet ist. Die Durchmesser der drei ersten zylindrischen Ausbuchtungen 710.1, 710.2, 710.3 entsprechen in etwa den Durchmessern der drei runden Steckdosenöffnungen 610.1, 610.2, 610.3 der Aussenhülle 600. Im Bereich zwischen der ersten Sollbruchstelle 750.1 und der zweiten Sollbruchstelle 750.2 liegen drei weitere zylindrische Ausbuchtungen 720.1, 720.2, 720.3 an der Hinterseite 701 der Abdeckleiste 700 vor, welche wie die ersten drei zylindrischen Ausbuchtungen 710.1, 710.2, 710.3 angeordnet und dimensioniert sind. Rechts der zweiten Sollbruchstelle 750.2 sind weitere nicht dargestellte zylindrische Ausbuchtungen zwischen den weiteren Sollbruchstellen in gleicher Weise angeordnet. Damit lässt sich die Abdeckleiste 700 form- und kraftschlüssig in den Steckdosenöffnungen der Aussenhülle 600 befestigen, wodurch die Steckdosen verschlossen vorliegen. Zum Freilegen einer oder mehrerer Steckdosen genügt es, den entsprechenden Bereich aus der Abdeckleiste 700 heraus zu brechen.

Die vorstehend beschriebenen Ausführungsformen sind lediglich als illustrative Beispiele zu verstehen, welche im Rahmen der Erfindung beliebig abgewandelt werden können.

So ist es auch möglich, zusätzlich zur Oberseite 101 und der Unterseite 102 auch auf den anderen beiden Seitenflächen der Isolatorschiene 100 weitere Stromleiter vorzusehen. Damit können beispielsweise zusätzliche Stromkreise in der Sockelleiste realisiert werden.

Anstelle des Vorstands 402.3 mit der schräg nach unten ausgerichteten Nut 403 kann in Fig. 9 kann auch ein Vorstand mit einer hinterschnittenen Nut vorgesehen werden, in welche sich die Isolatorschiene 100 einschieben lässt. In diesem Fall kann beispielsweise auf eine gesonderte Halteschiene 500, wie in Fig. 11 dargestellt, verzichtet werden.

Die in Fig. 13 gezeigten Steckdosenöffnungen 610.1, 610.2, 610.3, 620.1, 620.2, 620.3, 630.1, 630.2, 630.3 können je nach Steckertyp bzw. Steckerstiften beispielsweise auch nicht rund, insbesondere schlitzartig, ausgebildet sein. Die Buchsen 200 aus Fig. 6 und 7 würden in diesem Fall entsprechend der Form der nicht runden Steckerstifte angepasst.

Ebenso ist es denkbar, die Isolatorschiene 100 in Fig. 14 beispielsweise parallel zum vertikalen Schenkel 402 oder horizontalen Schenkel 401 des Unterbaus 400 auszurichten und die Steckdosenöffnungen im vertikalen Schenkel 602 oder dem horizontalen Schenkel 601 der Aussenhülle 600 anzubringen. Selbstverständlich können auch gleichzeitig Steckdosenöffnungen in der abgeschrägten Fläche 603 und im vertikalen Schenkel 602 und/oder dem horizontalen Schenkel 601 der Aussenhülle 600 vorliegen.

Ebenso kann im Freiraum 405 in Fig. 14 eine zusätzliche Isolatorschiene mit weiteren Stromleitern angebracht werden, wodurch sich die Anzahl der unabhängigen Stromkreise weiter vergrössern lässt.

Für die Bestandteile der Sockelleiste lassen sich zudem auch andere elektrisch isolierende Materialien als Polyvinylchlorid verwenden.

In Eckbereichen eines Raumes können Sockelleisten, welche an verschiedenen Wänden angebracht sind, durch Kurvenstücke für Innen- oder Aussenecken eines Raumes miteinander verbunden werden. Die Kurvenstücke können dabei insbesondere der Form der Sockelleiste aus Fig. 14 angepasst sein, um einen optisch ansprechenden Übergang zu erhalten.

Zusammenfassend ist festzustellen, dass eine neuartige stromführende Sockelleiste geschaffen wurde, welche sich insbesondere durch eine äusserst kompakte Bauweise auszeichnet.

## Patentansprüche

1. Sockelleiste mit mehreren integrierten Steckdosen (610, 620, 630) für die Aufnahme eines Steckers eines elektrischen Geräts, wobei innerhalb der Sockelleiste wenigstens zwei entlang einer Längsrichtung der Sockelleiste verlaufende Stromleiter (10, 20) angeordnet sind, welche mit Buchsen (200, 200.1, 200.2, 200.3) der integrierten Steckdosen (610, 620, 630) elektrisch verbunden sind, **dadurch gekennzeichnet, dass** die wenigstens zwei Stromleiter (10, 20) kammförmig ausgebildet sind.

2. Sockelleiste nach Anspruch 1, **dadurch gekennzeichnet, dass** die wenigstens zwei Stromleiter (10, 20) berührungslos miteinander kämmend angeordnet sind.

3. Sockelleiste nach Anspruch 1 oder 2, **dadurch gekennzeichnet, dass** die wenigstens zwei Stromleiter (10, 20) auf einer gemeinsamen Isolatorschiene (100), welche bevorzugt als Rechteckleiste ausgebildet ist, befestigt sind.

4. Sockelleiste nach Anspruch 3, **dadurch gekennzeichnet, dass** die wenigstens zwei Stromleiter (10, 20) gemeinsam auf einer ersten Seitenfläche (101) der Isolatorschiene (102) flach aufliegend angebracht sind, wobei die wenigstens zwei Stromleiter (10, 20) bevorzugt bandartig ausgebildet sind.

5. Sockelleiste nach Anspruch 4, **dadurch gekennzeichnet, dass** die wenigstens zwei Stromleiter (10, 20) je in einer von wenigstens zwei Vertiefungen (110, 120) auf der ersten Seitenfläche (101) vollständig eingelassen sind, wobei bevorzugt die wenigstens zwei Vertiefungen (110, 120) der Isolatorschiene (100) den wenigstens zwei Stromleitern (10, 20) entsprechende Formen aufweisen.

6. Sockelleiste nach einem der Ansprüche 1 - 5, **dadurch gekennzeichnet, dass** Buchsenpaare (200.1, 200.3) der integrierten Steckdosen (610, 620, 630), welche mit den wenigstens zwei Stromleitern (10, 20) elektrisch verbunden sind, auf zinkenförmigen Vorständen (12.1, 12.2, 12.3, 22.1, 22.2,...22.5) der wenigstens zwei Stromleiter (10, 20) angebracht sind und bevorzugt senkrecht von diesen abstehen.

7. Sockelleiste nach einem der Ansprüche 4-6, **dadurch gekennzeichnet, dass** auf einer zweiten Seitenfläche (102) der Isolatorschiene (100), welche der ersten Seitenfläche (101) bevorzugt gegenüberliegend angeordnet ist, mindestens ein zusätzlicher Stromleiter (30, 40) angeordnet ist.

8. Sockelleiste nach Anspruch 7, **dadurch gekennzeichnet, dass** zusätzliche Buchsen (200.2) der integrierten Steckdosen, welche mit dem mindestens einen zusätzlichen Stromleiter (30, 40) elektrisch verbunden sind, durch Bohrungen (132.1.1, 132.2.1, 142.1.1, 142.2.1, ...142.5.1) in der Isolatorschiene (100) durchgeführt sind, so dass sie insbesondere auf der ersten Seitenfläche (101) aus der Isolatorschiene (100) herausragen.

9. Sockelleiste nach einem der Ansprüche 4-6, **dadurch gekennzeichnet, dass** auf einer zweiten Seitenfläche (102) der Isolatorschiene (100), welche der ersten Seitenfläche (101) bevorzugt gegenüberliegend angeordnet ist, mindestens zwei zusätzliche Stromleiter (30, 40) angeordnet sind, welche kammförmig ausgebildet sind, sowie flach aufliegend und miteinander kämmend angeordnet sind und dass die mindestens zwei zusätzlichen Stromleiter (30, 40) bevorzugt bandartig ausgebildet sind.

10. Sockelleiste nach Anspruch 9, **dadurch gekennzeichnet, dass** zusätzliche Buchsen (200.2) der integrierten Steckdosen, welche jeweils mit einem der mindestens zwei zusätzlichen Stromleitern (30, 40) elektrisch verbunden sind, an zusätzlichen zinkenförmigen Vorständen (31.1, 31.2, 42.1, 42.2,...42.5) der mindestens zwei zusätzlichen Stromleiter (30, 40) angebracht sind, wobei die zusätzlichen Buchsen (200.2) bevorzugt durch Bohrungen (132.1.1, 132.2.1, 142.1.1, 142.2.1, ...142.5.1) in der Isolatorschiene (100) durchgeführt sind, so dass sie insbesondere auf der ersten Seitenfläche (101) aus der Isolatorschiene (100) herausragen.

11. Sockelleiste nach einem der Ansprüche 3-10, **dadurch gekennzeichnet, dass** die Isolatorschiene (100) mit einer lösbaren Halteschiene (500) form- und/oder kraftschlüssig in einem Unterbau (400) der Sockelleiste, welcher bevorzugt als im Wesentlichen L-förmige Profilleiste vorliegt, angebracht ist.

12. Sockelleiste nach Anspruch 11, **dadurch gekennzeichnet, dass** der Unterbau (400) durch eine formschlüssig befestigte Aussenhülle (600) verschlossen ist, wobei die Aussenhülle (600) über mehrere Steckdosenöffnungen (610.1, 610.2, 610.3, 620.1, 620.2,...), insbesondere Bohrungen oder Schlitze, zum Einschieben von Steckerstiften verfügt, welche direkt über den Buchsen (200.1, 200.2, 200.3) der integrierten Steckdosen (610, 620, 630) angeordnet sind.

13. Sockelleiste nach Anspruch 12, **dadurch gekennzeichnet, dass** die Aussenhülle (600) als Profilleiste mit einem vertikalen und einem horizontalen Schenkel (601, 602) ausgebildet ist, bei welcher der vertikale Schenkel (602) über eine abgeschrägte Fläche (603) mit dem horizontalen Schenkel (602) verbunden ist, wobei die abgeschrägte Fläche (603) bevorzugt einen Winkel von 30° zum horizontalen Schenkel (601) aufweist.

14. Sockelleiste nach Anspruch 13, **dadurch gekennzeichnet, dass** die Steckdosenöffnungen (610.1, 610.2, 610.3, 620.1, 620.2,...) zum Einschieben der Steckerstifte in der abgeschrägten Fläche (603) der Aussenhülle (600) eingebracht sind.

15. Sockelleiste nach einem der Ansprüche 12-14, **dadurch gekennzeichnet, dass** wenigstens ein Teil der integrierten Steckdosen (610, 620, 630), insbesondere Steckdosen, welche nicht mit einem Stecker verbunden sind, durch eine lösbare in den Steckdosenöffnungen (610.1, 610.2, 610.3, 620.1, 620.2,...) der Aussenhülle (600) kraft- und/oder formschlüssig befestigte Abdeckleiste (700) verschlossen sind.

16. Sockelleiste nach einem der Ansprüche 11-15, **dadurch gekennzeichnet, dass** unterhalb der Isolatorschiene (100) ein Freiraum zur Aufnahme von Kabeln im Unterbau (400) ausgebildet ist.

17. Verfahren zur Montage einer Sockelleiste, insbesondere einer Sockelleiste nach einem der Ansprüche 1-16, **dadurch gekennzeichnet, dass**
a) an einer Isolatorschiene (100) wenigstens zwei Stromleiter (10, 20) befestigt werden, wobei die wenigstens zwei Stromleiter (10, 20) kammförmig ausgebildet sind;
b) ein Unterbau (400) der Sockelleiste, welcher bevorzugt L-förmig ausgebildet ist, in einem Sockelbereich einer Wand befestigt wird;
c) die Isolatorschiene (100) mit den befestigten wenigstens zwei Stromleitern (10, 20) im Unterbau (400), insbesondere mit einer Halterungsschiene (500), form- und/oder kraftschlüssig angebracht wird;
d) der Unterbau (400) mit der darin befestigten Isolatorschiene (100) durch eine Aussenhülle (600) mit Steckdosenöffnungen (610.1, 610.2, 610.3, 620.1, 620.2,...) für Steckerstifte formschlüssig verschlossen wird.
